# EUROPEAN PATENT SPECIFICATION

(11) **EP 2 269 933 B1**
(45) Date of publication and mention of the grant of the patent: **11.04.2018**
(21) Application number: 08740930.6
(22) Date of filing: 30.04.2008
(51) Int. Cl.: B66B 5/28, F16F 9/32, B66B 5/00, F16F 13/00

(54) **SHOCK ABSORBER FOR ELEVATOR**
STOSSDÄMPFER FÜR EINEN AUFZUG
AMORTISSEUR DE CHOCS POUR ASCENSEUR

(43) Date of publication of application: 05.01.2011
(73) Proprietor: Mitsubishi Electric Corporation, Chiyoda-ku Tokyo 100-8310 (JP)
(72) Inventor: IMURA, Mitsuyoshi, Tokyo 100-8310 (JP)
(74) Representative: Hoffmann Eitle
(86) International application number: PCT/JP2008/058262
(87) International publication number: WO 2009/133604

(56) References cited:
- FR-A1- 2 267 439
- JP-A- 7 237 846
- JP-A- 2003 146 554
- JP-A- 2003 146 554
- JP-A- 2004 324 879
- JP-U- S55 105 637

## Description

### TECHNICAL FIELD

The present invention relates to an elevator buffer for alleviating mechanical shock to a car or a counterweight.

### BACKGROUND ART

Conventionally, in order to achieve reductions in height dimensions, elevator hydraulic buffers have been proposed in which a plurality of stages of plungers that are formed so as to have sequentially smaller diameters and that are configured so as to enable vertical extension and compression penetrate into a base cylinder that is filled with a working fluid. Coil springs that restore positions of the plungers after compression of the hydraulic buffer are respectively connected between each of the stages of plungers. The positions of each of the stages of plungers are restored by the plungers in upper and lower stages being displaced away from each other by the forces from the coil springs (see Patent Literature 1).

Patent Literature 2 discloses a multi-stage hydraulic shock absorber comprising a base cylinder filled with an operating oil, a plunger composed of a plurality of cylindrical plunger constituting members inserted into the base cylinder with sequentially smaller diameters and slidably fitted in a shaft direction, wherein at first the cylindrical plunger constituting member with a largest diameter is inserted into the base cylinder, and sequentially a next cylindrical plunger constituting member is inserted into a previously inserted cylindrical plunger constituting member, wherein, in order to receive a hydraulic pressure resistance of the operation oil, each time the cylindrical plunger is inserted, the device is provided with an integrating means, so that neighboring cylindrical plunger constituting members are temporarily fixed to each other so as not to be slidable and that when one of the temporarily fixed cylindrical plunger constituting members is inserted, temporary fixation is released. A similar device is disclosed by Patent Literature 3.

[Patent Literature 1] Japanese Patent Laid-Open No. 2004-324879 (Gazette)
[Patent Literature 2] Japanese Patent Laid-Open No. 2003-146554 A
[Patent Literature 3] Japanese Patent Laid-Open No. S55 105637 U

### DISCLOSURE OF THE INVENTION

### PROBLEM TO BE SOLVED BY THE INVENTION

However, in conventional elevator hydraulic buffers such as that described above, because coil springs are connected between each of the stages of plungers, even if the upper stage plunger is accommodated in the lower stage plunger, and the buffer is compressed completely, the upper stage plunger projects outward from the lower stage plunger unnecessarily by an amount proportionate to heights of the coil springs that are interposed between
each of the stages of plungers. Consequently, in order to ensure a predetermined stroke for each of the stages of plungers, lengths of each of the stages of plungers must be made longer than necessary, thereby increasing overall height dimensions of the hydraulic buffer when restored.

Except for the coil spring that is disposed in the uppermost layer, each of the coil springs must support not only the weight of the upper stage plungers but also the weight of the coil springs above. Consequently, the thicknesses or numbers of turns in the coil springs must be increased more for coil springs that are disposed lower down, further increasing overall height dimensions of the hydraulic buffer when restored.

The present invention aims to solve the above problems and an object of the present invention is to provide an elevator buffer that enables shortening of height dimensions.

### MEANS FOR SOLVING THE PROBLEM

In order to achieve the above object, according to one aspect of the present invention, there is provided an elevator buffer, characterized in including: a base cylinder that includes: a base portion; and a cylinder portion that is disposed on the base portion, a hydraulic fluid being kept inside the cylinder portion; a plurality of plungers that are coupled sequentially so as to be slidable upward from the cylinder portion, and that are vertically displaceable separately relative to the cylinder portion while being subjected to resistance from the hydraulic fluid; and a plurality of forcing bodies that are disposed side by side on the base portion, and that force each of the plungers upward away from the base portion separately. Moreover, a plurality of stoppers that separately restrict displacement of each of the plungers toward the base portion are disposed on the base portion; and the stoppers are disposed parallel to the forcing bodies.

### BRIEF DESCRIPTION OF THE DRAWINGS

Figure 1 is a cross section that shows an elevator buffer according to Embodiment 1 of the present invention;
Figure 2 is a cross section that shows a state in which the elevator buffer from Figure 1 is compressed;
Figure 3 is a cross section that shows an elevator buffer according to Embodiment 2 of the present invention;
Figure 4 is a cross section that shows a state in which the elevator buffer from Figure 3 is compressed;
Figure 5 is a cross section that shows an elevator buffer according to Embodiment 3 of the present invention; and
Figure 6 is a cross section that shows a state in which the elevator buffer from Figure 5 is compressed.

### BEST MODE FOR CARRYING OUT THE INVENTION

Preferred embodiments of the present invention will now be explained with reference to the drawings.

### Embodiment 1

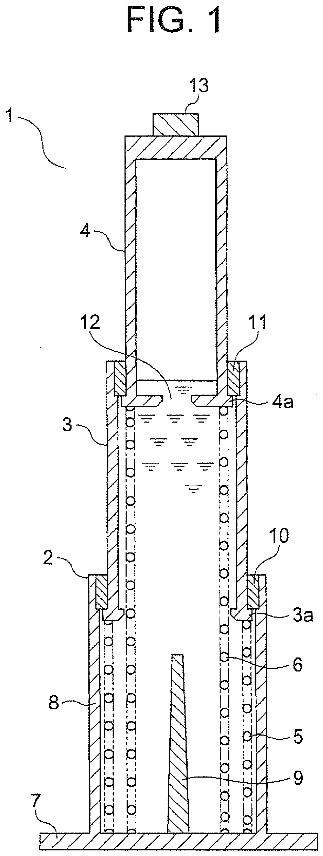

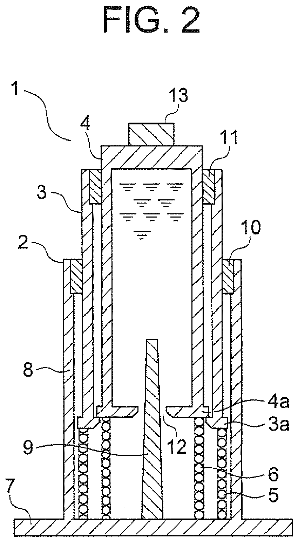

Figure 1 is a cross section that shows an elevator buffer according to Embodiment 1 of the present invention. Figure 2 is a cross section that shows a state in which the elevator buffer from Figure 1 is compressed. In the figure, a buffer 1 is installed in a pit portion of a hoistway. Consequently, if a hoisted body that can be raised and lowered inside the hoistway (such as a car or a counterweight, for example) passes a lowermost floor and continues descending for any reason, the hoisted body will collide into the buffer 1. When the buffer 1 bears the impact of the hoisted body, mechanical shock from the hoisted body is absorbed, alleviating mechanical shock on the hoisted body.

The buffer 1 has: a base cylinder 2 that is fixed to the pit portion of the hoistway; a plurality of plungers 3 and 4 (in this example, two) that are coupled sequentially from the base cylinder 2; and a plurality of restoring springs (a plurality of forcing bodies) 5 and 6 (in this example, two) that separately force the respective plungers 3 and 4 upward.

The base cylinder 2 has: a bottom plate (a base portion) 7 that is disposed horizontally; and a tubular cylinder portion 8 that is disposed on the bottom plate 7. A hydraulic control rod 9 that projects upward from the bottom plate 7 is disposed inside the cylinder portion 8. A horizontal cross-sectional area of the hydraulic control rod 9 decreases continuously from a lower end portion of the hydraulic control rod 9 toward an upper end portion.

The respective plungers 3 and 4 are coupled slidably in order of the plunger 3 and the plunger 4 upward from the cylinder portion 8. The respective plungers 3 and 4 are thereby vertically displaceable separately relative to the base cylinder 2.

In this example, the lowermost plunger 3 is constituted by a tubular member in which upper and lower end portions are open, and the uppermost plunger 4 is constituted by a tubular member in which an upper end portion is closed. Outside diameters are reduced in order of the cylinder portion 8, the lowermost plunger 3, and the uppermost plunger 4. The cylinder portion 8, the lowermost plunger 3, and the uppermost plunger 4 are coupled to each other such that the uppermost plunger 4 is inserted inside the lowermost plunger 3, and the lowermost plunger 3 is inserted inside the cylinder portion 8.

The buffer 1 can be extended and compressed depending on the displacement of the respective plungers 3 and 4 relative to the base cylinder 2. Specifically, the buffer 1 extends by the respective plungers 3 and 4 being displaced away from the bottom plate 7 (Figure 1), and is compressed by the respective plungers 3 and 4 being displaced toward the bottom plate 7 (Figure 2).

An annular contacting member 10 that contacts an outer circumferential surface of the lowermost plunger 3 is disposed on an upper end inner circumferential portion of the cylinder portion 8. The lowermost plunger 3 is slid vertically relative to the cylinder portion 8 while contacting the contacting member 10.

A disengagement preventing portion 3a that prevents the plunger 3 from disengaging from the cylinder portion 8 is disposed on a lower end portion of the lowermost plunger 3. The disengagement preventing portion 3a is a stepped portion that is disposed on an outer circumferential portion of the lowermost plunger 3. Displacement of the lowermost plunger 3 upward (away from the bottom plate 7) is restricted by engagement of the disengagement preventing portion 3a with the contacting member 10. Dislodgment of the lowermost plunger 3 from the cylinder portion 8 is thereby prevented.

An annular contacting member 11 that contacts an outer circumferential surface of the uppermost plunger 4 is disposed on an upper end inner circumferential portion of the lowermost plunger 3. The uppermost plunger 4 is slid vertically relative to the lowermost plunger 3 while contacting the contacting member 11.

A disengagement preventing portion 4a that prevents the plunger 4 from disengaging from the lowermost plunger 3 is disposed on a lower end portion of the uppermost plunger 4. The disengagement preventing portion 4a is a stepped portion that is disposed on an outer circumferential portion of the uppermost plunger 4. Displacement of the uppermost plunger 4 upward (away from the bottom plate 7) is restricted by engagement of the disengagement preventing portion 4a with the contacting member 11. Dislodgment of the uppermost plunger 4 from the lowermost plunger 3 is thereby prevented.

An orifice (an aperture) 12 that has a predetermined inside diameter is disposed on a bottom portion of the uppermost plunger 4. A hydraulic fluid is kept inside the cylinder portion 8 and inside the respective plungers 3 and 4. The hydraulic fluid leaves or enters an internal portion of the uppermost plunger 4 through the orifice 12 on at least one of the respective plungers 3 and 4 being displaced relative to the cylinder portion 8 (i.e., the buffer 1 being extended or compressed). The respective plungers 3 and 4 are subjected to resistance of the hydraulic fluid that passes through the orifice 12 while being displaced relative to the cylinder portion 8.

As shown in Figure 2, the hydraulic control rod 9 is insertable into the orifice 12 by the uppermost plunger 4 being displaced relative to the base cylinder 2. The amount of insertion of the hydraulic control rod 9 changes depending on the displacement of the uppermost plunger 4 relative to the base cylinder 2. The resistance of the hydraulic fluid is controlled by the changes in the amount of insertion of the hydraulic control rod 9 into the orifice 12. Moreover, a buffering material 13 that bears the collision of the hoisted body is disposed on an upper end portion of the uppermost plunger 4.

The respective restoring springs 5 and 6 are disposed inside the cylinder portion 8. The respective restoring springs 5 and 6 are disposed side by side on the bottom plate 7. In this example, the respective restoring springs 5 and 6 are constituted by coil springs, and the restoring spring 6 is disposed inside the restoring spring 5. The winding directions of the respective restoring springs 5 and 6 are in reverse directions from each other. By making the winding directions of the respective restoring springs 5 and 6 reverse directions, the restoring springs 5 and 6 are prevented from overlapping each other.

The restoring spring 5 is compressed between the lowermost plunger 3 and the bottom plate 7, and the restoring spring 6 is compressed between the uppermost plunger 4 and the bottom plate 7. Thus, the lowermost plunger 3 is forced upward away from the bottom plate 7 by the restoring spring 5, and the uppermost plunger 4 is forced upward away from the bottom plate 7 by the restoring spring 6. In other words, the restoring spring 5 constitutes a lowermost stage restoring spring that forces the lowermost plunger 3 upward, and the restoring spring 6 constitutes an uppermost stage restoring spring that forces the uppermost plunger 4 upward.

Next, operation will be explained. During normal operation, the respective plungers 3 and 4 are displaced upward separately by the forces of the respective restoring springs 5 and 6, and the buffer 1 is held in an extended state, as shown in Figure 1.

If the hoisted body collides into the buffer 1 for any reason, the respective plungers 3 and 4 are pushed downward by the impact force that is received from the hoisted body. Here, the hydraulic fluid is pushed through the orifice 12 into the uppermost plunger 4, and the respective restoring springs 5 and 6 are compressed. Thus, the respective plungers 3 and 4 are subjected to resistance from the hydraulic fluid and elastic resilience of the respective restoring springs 5 and 6 while being pushed downward. The buffer 1 thereby absorbs the mechanical shock from the hoisted body while being compressed, alleviating mechanical shock on the hoisted body.

When the hoisted body is raised after the buffer 1 has been compressed, the hydraulic fluid flows out from inside the uppermost plunger 4 as the respective plungers 3 and 4 are displaced upward separately by the forces from the respective restoring springs 5 and 6. Thus, the buffer 1 extends upward, and is restored automatically to its state during normal operation.

In an elevator buffer 1 of this kind, because a plurality of restoring springs 5 and 6 that separately force respective plungers 3 and 4 upward away from a bottom plate 7 of a base cylinder 2 are disposed side by side on the bottom plate 7, a common bottom plate 7 can be made a height reference for each of the respective restoring springs 5 and 6 when the buffer 1 is completely compressed. Thus, the amount of upward protrusion of the respective plungers 3 and 4 when the buffer 1 is completely compressed can be prevented from being greater than necessary due to interposition of the respective restoring springs 5 and 6. Consequently, lengths of the respective plungers 3 and 4 can be shortened while continuing to ensure a predetermined stroke of the respective plungers 3 and 4, enabling reductions in overall height dimensions of the buffer 1 to be achieved. Thus, cost reductions can be achieved, and manufacturing and installation of the buffer 1 can also be facilitated. Hoistway height dimension reductions can also be achieved.

### Embodiment 2

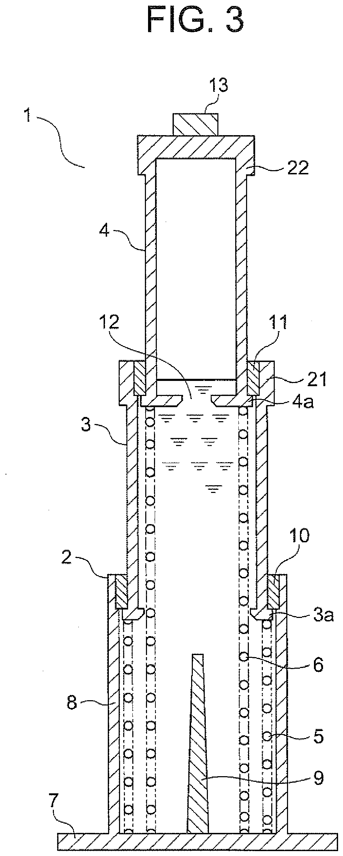

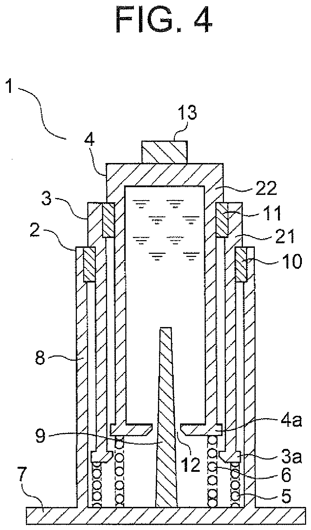

Figure 3 is a cross section that shows an elevator buffer according to Embodiment 2 of the present invention. Figure 4 is a cross section that shows a state in which the elevator buffer from Figure 3 is compressed. In the figures, a stopper 21 is disposed on an upper end portion of a lowermost plunger 3. The stopper 21 is a stepped portion that is disposed on an outer circumferential portion of the lowermost plunger 3. Displacement of the lowermost plunger 3 downward relative to a cylinder portion 8 (toward a bottom portion) is restricted by engagement of the stopper 21 with a contacting member 10.

A stopper 22 is disposed on an upper end portion of an uppermost plunger 4. The stopper 22 is a stepped portion that is disposed on an outer circumferential portion of the uppermost plunger 4. Displacement of the uppermost plunger 4 downward relative to the lowermost plunger 3 is restricted by engagement of the stopper 22 with a contacting member 11.

Consequently, displacement of the respective plungers 3 and 4 toward a bottom plate 7 is restricted by the respective plungers 3 and 4 being engaged by the stoppers 21 and 22 sequentially from the cylinder portion 8 (Figure 4). The rest of the configuration is similar to that of Embodiment 1.

In an elevator buffer 1 of this kind, because stoppers 21 and 22 are disposed on respective plungers 3 and 4, and displacement of the respective plungers 3 and 4 toward a bottom plate 7 is restricted by the respective plungers 3 and 4 being engaged by the stoppers 21 and 22 sequentially from a cylinder portion 8, the respective plungers 3 and 4 can be prevented from approaching the bottom plate 7 without any restriction. Consequently, even if the respective restoring springs 5 and 6 are compressed by the displacement of the respective plungers 3 and 4, spring wires of the respective restoring springs 5 and 6 can be prevented from being placed completely in close contact. Thus, increases in torsional stress of the spring wires of the respective restoring springs 5 and 6 can be suppressed, enabling spring characteristics of the respective restoring springs 5 and 6 to be prevented from being lost.

### Embodiment 3

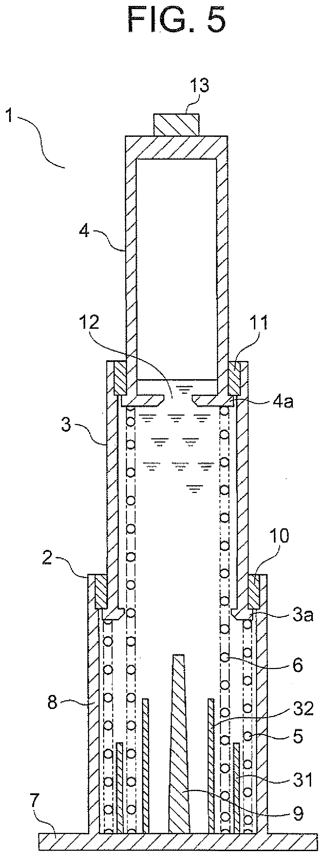

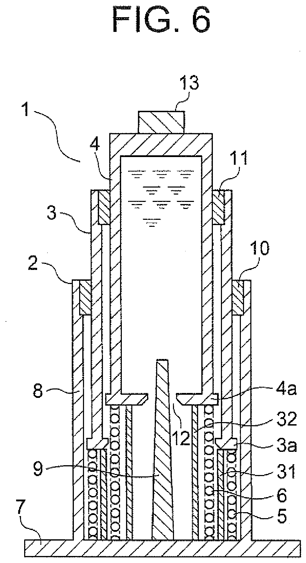

Figure 5 is a cross section that shows an elevator buffer according to Embodiment 3 of the present invention. Figure 6 is a cross section that shows a state in which the elevator buffer from Figure 5 is compressed. In the figures, a plurality of stoppers 31 and 32 (in this example, two) that separately restrict displacement of respective plungers 3 and 4 toward a bottom plate 7 are disposed on the bottom plate 7. The stopper 31 restricts displacement of the lowermost plunger 3 by being placed in contact with the lowermost plunger 3. The stopper 32 restricts displacement of the uppermost plunger 4 by being placed in contact with the uppermost plunger 4.

The respective stoppers 31 and 32 are disposed inside a cylinder portion 8. The respective stoppers 31 and 32 are disposed so as to be parallel to respective restoring springs 5 and 6. In this example, the stopper 31 is constituted by a tubular member that is parallel to an inner circumference of the restoring spring 5, and the stopper 32 is constituted by a tubular member that is parallel to an inner circumference of the restoring spring 6. A height of the stopper 31 is lower than a height of the stopper 32. The rest of the configuration is similar to that of Embodiment 1.

In an elevator buffer 1 of this kind, because a plurality of stoppers 31 and 32 that separately restrict displacement of respective plungers 3 and 4 toward a bottom plate 7 are disposed on the bottom plate 7, the respective plungers 3 and 4 can be prevented from approaching the bottom plate 7 without any restriction, and spring wires of the respective restoring springs 5 and 6 can be prevented from being placed completely in close contact. Thus, spring characteristics of the respective restoring springs 5 and 6 can be prevented from being lost. Because the respective restoring springs 5 and 6 are guided by the respective stoppers 31 and 32 while being extended and compressed, extending and compressing operations of the respective restoring springs 5 and 6 can be performed smoothly. In addition, because increases in the weight of the respective plungers 3 and 4 can be prevented, prevention of enlargement of the respective restoring springs 5 and 6 can also be achieved.

Moreover, in each of the above embodiments, the respective restoring springs 5 and 6 are disposed inside the cylinder portion 8, but the respective restoring springs 5 and 6 may also be disposed outside the cylinder portion 8. In that case, spring bearing portions that bear the forces from the respective restoring springs 5 and 6 are respectively disposed on upper end portions of the respective plungers 3 and 4.

In each of the above embodiments, the number of plungers that are coupled sequentially upward from the cylinder portion 8 is two, but three or more plungers may also be linked sequentially so as to be slidable upward from the cylinder portion 8. In that case, an equal number of restoring springs to the number of plungers are disposed side by side on the bottom plate 7.

## Claims

1. An elevator buffer, comprising:
a base cylinder (2) that comprises:
a base portion (7); and
a cylinder portion (8) that is disposed on the base portion (7), a hydraulic fluid being kept inside the cylinder portion (8); and
a plurality of plungers (3,4) that are coupled sequentially so as to be slidable upward from the cylinder portion (8), and that are vertically displaceable separately relative to the cylinder portion (8) while being subjected to resistance from the hydraulic fluid;
**characterized by** further comprising:
a plurality of forcing bodies (5,6) that are disposed side by side on the base portion (7), and that force each of the plungers (3,4) upward away from the base portion (7) separately; wherein
a plurality of stoppers (31,32) that separately restrict displacement of each of the plungers (3,4) toward the base portion (7) are disposed on the base portion (7); and
the stoppers (31,32) are disposed parallel to the forcing bodies (5,6).

## Patentansprüche

1. Aufzugsdämpfer aufweisend:
einen Basiszylinder (2), der aufweist:
einen Basisabschnitt (7); und
einen Zylinderabschnitt (8), der an dem Basisabschnitt (7) angeordnet ist, wobei ein Hydraulikfluid innerhalb des Zylinderabschnitts (8) gehalten wird; und
eine Vielzahl von Kolben (3, 4), die aufeinanderfolgend so verbunden sind, dass sie von dem Zylinderabschnitt (8) aufwärts verschiebbar sind, und die relativ zu dem Zylinderabschnitt (8) separat vertikal verschiebbar sind, während sie einem Widerstand von dem Hydraulikfluid ausgesetzt sind;
**dadurch gekennzeichnet, dass** der Aufzugsdämpfer ferner aufweist:
eine Vielzahl von Zwingkörpern (5, 6), die nebeneinander an dem Basisabschnitt (7) angeordnet sind, und die jeden der Kolben (3, 4) separat aufwärts weg von dem Basisabschnitt zwingen; wobei
eine Vielzahl von Stoppern (31, 32), die separat die Verschiebung von jedem der Kolben (3, 4) in Richtung des Basisabschnitts (7) begrenzen, an dem Basisabschnitt (7) angeordnet sind; und
die Stopper (31. 32) parallel zu den Zwingkörpern (5, 6) angeordnet sind.

## Revendications

1. Amortisseur pour ascenseur, comprenant :
un cylindre de base (2) qui comprend :
une partie formant base (7) ; et
une partie formant cylindre (8) qui est disposée sur la partie formant base (7), un fluide hydraulique étant maintenu à l'intérieur de la partie formant cylindre (8) ; et
une pluralité de pistons (3, 4) qui sont couplés séquentiellement de manière à pouvoir coulisser vers le haut à partir de la partie formant cylindre (8) et qui peuvent être déplacés verticalement séparément par rapport à la partie formant cylindre (8) tout en étant soumis à une résistance provenant du fluide hydraulique ;
**caractérisé en ce qu'**il comprend en outre :
une pluralité de corps de forçage (5, 6) qui sont disposés côte à côte sur la partie formant base (7), et qui forcent chacun des pistons (3, 4) vers le haut en s'éloignant de la partie formant base (7) séparément ; dans lequel
une pluralité de butées (31, 32) qui limitent séparément le déplacement de chacun des pistons (3, 4) vers la partie formant base (7) sont disposées sur la partie formant base (7) ; et
les butées (31, 32) sont disposées parallèlement aux corps de forçage (5, 6).
